# EUROPÄISCHE PATENTSCHRIFT

(11) **EP 1 647 817 B1**
(45) Veröffentlichungstag und Bekanntmachung des Hinweises auf die Patenterteilung: **08.11.2017**
(21) Anmeldenummer: 05019655.9
(22) Anmeldetag: 09.09.2005
(51) Int. Cl.: G01M 17/02, G01B 11/25, G01B 11/30

(54) **Verfahren und Vorrichtung zur optischen Prüfung der Oberfläche eines Reifens**
Method and device for optical test of Tire surface
Méthode et dispositif pour test optique de surface de roue

(30) Priorität: 15.10.2004 DE 102004050355
(43) Veröffentlichungstag der Anmeldung: 19.04.2006
(73) Patentinhaber: Carl Zeiss Optotechnik GmbH, 83115 Neubeuern (DE)
(72) Erfinder: Nösekabel, Ernst-Heinrich, 83026 Rosenheim (DE); Steinbichler, Hans, Dr., 83115 Neubeuern (DE)
(74) Vertreter: Zinnecker, Armin

(56) Entgegenhaltungen:
- EP-A2- 1 148 328
- EP-A2- 1 188 546
- WO-A1-00/45125
- WO-A1-01/20539
- WO-A1-02/082009
- DE-A1- 10 313 191
- DE-A1- 19 608 632
- DE-A1- 19 930 688
- US-A1- 2003 160 193

## Beschreibung

Die Erfindung betrifft ein Verfahren zum Prüfen der Oberfläche eines Reifens, bei dem ein Muster auf den Reifen projiziert wird und von dem auf den Reifen projizierten Muster eine Aufnahme hergestellt wird. Die Erfindung betrifft ferner eine Vorrichtung zum Prüfen der Oberfläche eines Reifens, insbesondere eine Vorrichtung zur Durchführung des Verfahrens zum Prüfen der Oberfläche eines Reifens, mit einem Projektor zum Projizieren eines Musters auf den Reifen und einer Kamera zum Herstellen einer Aufnahme des auf den Reifen projizierten Musters. Die Erfindung ist zum Prüfen der Oberfläche von Reifen aller Art geeignet, insbesondere von PKW-Reifen, LKW-Reifen oder Reifen anderer Fahrzeuge oder Flugzeuge. Sie ist ferner geeignet zum Prüfen der Oberfläche anderer rotationssymmetrischer Gegenstände.

Fehlerhafte Stellen im Unterbau von Reifen stellen ein erhebliches Sicherheitsrisiko dar. Da derartige Fehlerstellen nicht oder nur sehr schwer von außen sichtbar sind, sind Reifenhersteller und Reifen-Runderneuerer auf zuverlässige Prüfmethoden zur Erkennung derartiger Fehler angewiesen.

Eine bekannte Praxis besteht darin, eine Druckprüfung der Reifen mit stark erhöhtem Reifendruck durchzuführen und dabei die Seitenwände der Reifen manuell abzutasten. An fehlerhaften Stellen des Unterbaus verändert sich die lokale Festigkeit des Reifens, wodurch sich die entsprechenden Stellen der Seitenwand bei Druckbelastung stärker dehnen als Bereiche mit intaktem Unterbau. Trainiertes Personal kann die auf diese Weise entstehenden leichten Wölbungen an der Seitenwand des Reifens durch Abtasten erfühlen.

Dieses manuelle Ermitteln der Fehlstellen birgt aber ein sehr hohes Unfallrisiko für die prüfenden Personen, da die unter hohem oder sehr hohem Druck stehenden Reifen bei der Prüfung platzen können. Ein weiterer Nachteil liegt in der schlechten Fehlerdetektion in Bereichen, in denen die Seitenwand, beispielsweise durch eine aufgeprägte Beschriftung, nicht eben ist.

Im Stand der Technik sind weitere Prüfverfahren bekannt, bei denen die Form des Reifens bei verschiedenen Reifendrücken vermessen wird. Die DE 100 19 387 C2 offenbart ein Verfahren zur Untersuchung von Reifen, bei dem der Innendruck des Reifens verändert wird und die durch die Änderung des Innendrucks hervorgerufene Formänderung des Reifens ermittelt wird. Dabei lassen sich aus mindestens zwei Formdatensätzen die durch die Druckänderung hervorgerufenen Formabweichungen ermitteln, welche Fehlerstellen im Unterbau des Reifens indizieren. Es ist allerdings erforderlich, die Reifen-Seitenwände mit Formerfassungssystemen wie beispielsweise Streifenprojektionssystemen mehrfach zu digitalisieren und anschließend die Fehler aus den Datensätzen zu extrahieren.

Das aus der EP 0 823 623 A1 bekannte Verfahren basiert auf der interferometrischen Shearographie. Bei diesem Verfahren werden Bildaufnahmen, nämlich Shearogramme, bei verschiedenen Reifendrücken aufgenommen. Aus den verschiedenen Bildern wird die Gradientendifferenz ermittelt. Aufgrund der sehr hohen Meßempfindlichkeit der Shearographie kann dieses Verfahren allerdings nur bei geringen Druckdifferenzen angewandt werden. Ferner ist es auch bei diesem Verfahren erforderlich, die Form des Reifens bei verschiedenen Reifendrücken zu vermessen.

Aus der EP-A2-1 148 328 ist ein Verfahren zum Prüfen der Oberfläche eines Reifens bekannt, bei dem Lichtschnitte auf die Oberfläche des Reifens projiziert werden. Die projizierten Lichtschnitte werden mit einer Kamera beobachtet. Der Reifen wird gegenüber der Kamera gedreht, und die Aufnahme der projizierten Lichtschnitte durch die Kamera erfolgt bei definierten Drehstellungen des Reifens gegenüber der Kamera. Die Messung der Formgestalt der Reifenoberfläche wir bei unterschiedlichen Reifendrücken wiederholt.

Die US-A1-2003/160 193 offenbart ein Messgerät zum Vermessen von Eisenbahnrädern.

Aus der EP-A2-1 148 328 ist ein Verfahren zum Prüfen der Oberfläche eines Reifens bekannt, bei dem Lichtschnitte auf die Oberfläche des Reifens projiziert werden. Die projizierten Lichtschnitte werden mit einer Kamera beobachtet. Der Reifen wird gegenüber der Kamera gedreht, und die Aufnahme der projizierten Lichtschnitte durch die Kamera erfolgt bei definierten Drehstellungen des Reifens gegenüber der Kamera. Die Messung der Formgestalt der Reifenoberfläche wir bei unterschiedlichen Reifendrücken wiederholt.

Die US-A1-2003/160 193 offenbart ein Messgerät zum Vermessen von Eisenbahnrädern.

Aufgabe der Erfindung ist es, ein vereinfachtes Verfahren und eine vereinfachte Vorrichtung der eingangs angegebenen Art vorzuschlagen.

Bei einem Verfahren der eingangs angegebenen Art wird diese Aufgabe durch die Merkmale des Anspruchs 1 gelöst. Der Reifen wird um seine Achse in verschiedene Drehstellungen gedreht, von dem auf den unter demselben Druck stehenden Reifen projizierten Muster wird eine weitere Aufnahme hergestellt und die globale Form des Reifens in den Aufnahmen wird miteinander verglichen. Auf diese Weise ist es möglich, eine klare Darstellung der Fehler zu erhalten.

Vorzugsweise wird auf den Reifen ein Streifenmuster projiziert.

Ferner ist es vorteilhaft, aus den Aufnahmen ein Differenzbild zu bilden.

Bei einer Vorrichtung der eingangs angegebenen Art wird die der Erfindung zugrundeliegende Aufgabe durch die Merkmale des Anspruchs 4 gelöst. Die Vorrichtung umfaßt einen Projektor zum Projizieren eines Musters auf den Reifen, eine Kamera zum Herstellen einer Aufnahme des auf den Reifen projizierten Musters, eine Vorrichtung zum Drehen des Reifens um seine Achse in verschiedene Drehstellungen und eine Bildverarbeitungseinrichtung zum Vergleichen der globalen Form von zwei in verschiedenen Drehstellungen des unter demselben Druck stehenden Reifens hergestellten Aufnahmen.

Vorteilhafte Weiterbildungen sind in den Unteransprüchen beschrieben.

Vorteilhaft ist es, wenn der Projektor zum Projizieren eines Streifenmusters auf den Reifen geeignet ist.

Die Bildverarbeitungseinrichtung kann beispielsweise von einem PC oder sonstigen Computer gebildet werden. Sie bildet vorzugsweise ein Differenzbild aus zwei in verschiedenen Drehstellungen des Reifens hergestellten Aufnahmen.

Nach einer weiteren vorteilhaften Weiterbildung umfaßt der Projektor eine Blitzlichtquelle. Die Blitzlichtquelle ist vorzugsweise mit der Vorrichtung zum Drehen des Reifens und mit der Kamera synchronisiert.

Nach einer weiteren vorteilhaften Weiterbildung projiziert der Projektor das Musters auf eine Teilfläche des Reifens. Es ist allerdings auch möglich, daß der Projektor das Muster auf die gesamte Reifenfläche projiziert. Es ist möglich, daß die Kamera Aufnahmen einer Teilfläche des Reifens herstellt. Dabei kann es sich um dieselbe Teilfläche handeln, auf die der Projektor das Muster projiziert. Es ist allerdings auch möglich, daß die Kamera Aufnahmen der gesamten Reifenfläche herstellt. In diesem Fall ist es vorteilhaft, wenn der Projektor das Muster auf die gesamte Reifenfläche projiziert.

Nach einer weiteren vorteilhaften Weiterbildung umfaßt die Vorrichtung mehrere Projektoren und/oder mehrere Kameras. Von besonderem Vorteil ist es, wenn die Vorrichtung auf zwei Seiten des Reifens jeweils mindestens einen Projektor und mindestens eine Kamera umfaßt. In diesem Fall können beide Seiten des Reifens gleichzeitig geprüft werden.

Eine weitere vorteilhafte Weiterbildung ist gekennzeichnet durch eine oder mehrere Verstelleinrichtungen zum Verstellen des Projektors bzw. der Projektoren und/oder der Kamera bzw. Kameras.

Das erfindungsgemäße Verfahren und die erfindungsgemäße Vorrichtung basieren auf einer Kombination der obligatorischen Druckprüfung und der Vermessung der Seitenwand-Oberfläche oder Seitenwand-Oberflächen bei konstant gehaltenem Druck. Dabei wird die globale Form des Reifens ausgenutzt, um eine klare Darstellung der Fehler zu erhalten. Mit dem erfindungsgemäßen Verfahren und der erfindungsgemäßen Vorrichtung können die bei Druckbelastung auftretenden Oberflächenverformungen an Fehlstellen sehr schnell und einfach ermittelt werden, ohne den Reifen einer zusätzlichen Belastung durch eine Druckänderung aussetzen zu müssen. Da der Reifen keine Druckänderung ausgesetzt werden muß, ist es ferner im allgemeinen möglich, das Verfahren schneller durchzuführen.

Das erfindungsgemäße Verfahren und die erfindungsgemäße Vorrichtungen sind auf alle rotationssymmetrischen Körper anwendbar, an deren Oberflächen Fehlstellen ermittelt werden müssen. Es ist insbesondere bei allen rotationssymmetrischen, elastischen Hohlkörpern anwendbar, die mit Druck beaufschlagt werden oder die zum Zweck der Prüfung mit Druck beaufschlagt werden können. Die Erfindung kann allerdings auch bei beliebigen anderen geometrischen Körpern angewendet werden, um Beulen oder Dellen oder ähnliche Fehler zu identifizieren.

Ausführungsbeispiele der Erfindung werden nachstehen anhand der beigefügten Zeichnung im einzelnen erläutert. In der Zeichnung zeigt
- Fig. 1: eine Vorrichtung zum Prüfen der Oberfläche eines Reifens in einer Draufsicht,
- Fig. 2: eine schematische Darstellung verschiedener Aufnahmen des auf den Reifen projizierten Musters,
- Fig. 3: eine aus mehreren Aufnahmen hergestellte Vergleichsaufnahme eines Reifens und
- Fig. 4: eine abgewandelte Ausführungsform der in Fig. 1 gezeigten Vorrichtung.

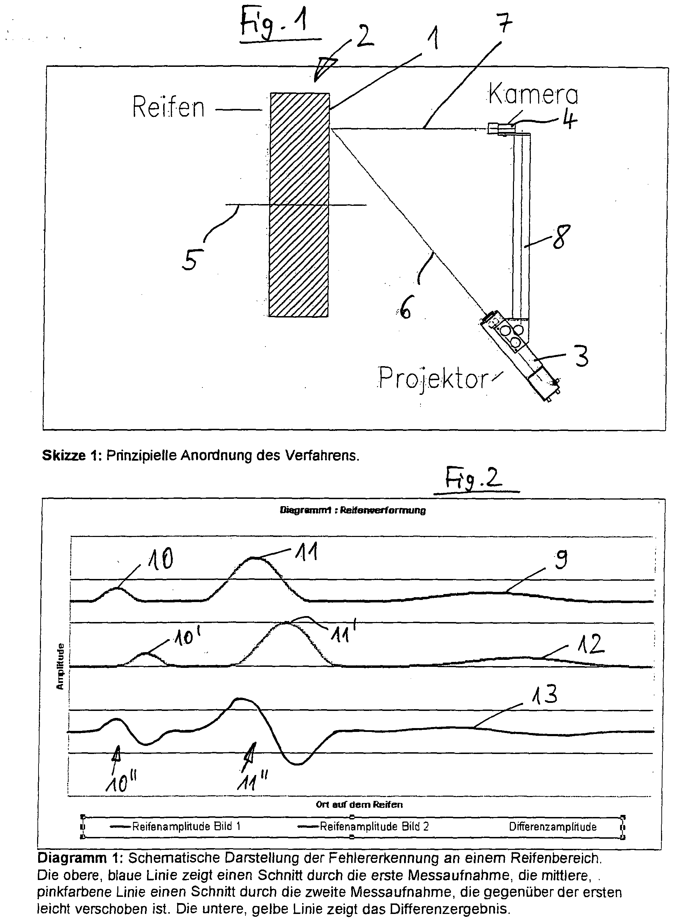

Die in Fig. 1 in Ansicht von oben schematisch dargestellte Vorrichtung zum Prüfen der Oberfläche 1, nämlich der Seitenwand, eines auf einer Felge montierten, unter Druck stehenden Reifens 2 umfaßt einen Projektor 3 zum Projizieren eines Streifenmusters auf die Oberfläche 1 des Reifens 2 und eine Kamera 4, die eine Aufnahmeoptik und einen CCD-Sensor umfaßt, zum Herstellen einer Aufnahme des auf die Oberfläche 1 des Reifens 2 projizierten Streifenmusters. Der Reifen 2 kann durch eine weitere Vorrichtung (in der Zeichnung nicht dargestellt) um seine Achse 5, nämlich seine Laufachse, gedreht werden. Die Achse 5 verläuft in horizontaler Richtung.

Die von dem Projektionsstrahl 6 und dem Aufnahmestrahl 7 aufgespannte Ebene verläuft ebenfalls horizontal. Die Achse 5 ist ein Bestandteil dieser Ebene.

Der Projektor 3 und die Kamera 4 sind an den Enden einer gehäusefesten Schiene 8 montiert, die in einer horizontalen Ebene senkrecht zur Achse 5 verläuft. Der Aufnahmestrahl 7 der Kamera 4 trifft senkrecht auf die Oberfläche 1 des Reifens 2. Der Projektionsstrahl 6 trifft in einem Winkel von etwa 30 bis 45° (auch andere Winkel sind möglich) auf die Oberfläche 1 des Reifens 2. Wie aus Fig. 1 ersichtlich, projiziert der Projektor 3 ein Streifenmuster nur auf eine Teilfläche der Seitenwand des Reifens 2. Die Kamera 4 stellt Aufnahmen von dieser Teilfäche her.

Die Vorrichtung umfaßt ferner eine Bildverarbeitungseinrichtung (in der Zeichnung nicht dargestellt), die insbesondere durch ein entsprechendes Programm in einem PC oder sonstigen Computer realisiert ist. Die Bildverarbeitungseinrichtung vergleicht zwei in verschiedenen Drehstellungen des Reifens 2 hergestellte Aufnahmen der Kamera 4, insbesondere dadurch, daß sie ein Differenzbild aus zwei in verschiedenen Drehstellungen des Reifens 2 hergestellten Aufnahmen bildet. Dieser Vorgang wird dann für eine Vielzahl von vorzugsweise aufeinanderfolgenden Drehstellungen des Reifens 2 wiederholt.

Der Projektor 3 ist ferner mit einer Blitzlichtquelle (in der Zeichnung nicht dargestellt) ausgestattet, die mit der Kamera 4 und dem Drehwinkel des Reifens 2 um die Achse 5 synchronisiert ist. Auf diese Weise können Aufnahmen in sehr kurzer Zeit hergestellt werden, beispielsweise in einer 1/1000-Sekunde oder noch kürzeren Zeiten. Die Aufnahmen können bei Stillstand des Reifens 2 hergestellt werden. Es ist allerdings auch möglich, den Reifen 2 kontinuierlich um die Achse 5 rotieren zu lassen. Dabei soll der Reifen 2 "langsam" im Verhältnis zur Verschlußzeit der Kamera 4 und/oder der Leuchtdauer eines Blitzes der Blitzlichtquelle rotieren. Die Rotationsgeschwindigkeit des Reifens 2 um die Achse 5 soll also im Verhältnis zu der Belichtungszeit der Kamera 4 und/oder der Leuchtdauer eines Blitzes der Blitzlichtquelle hinreichend niedrig sein, um auswertbare Aufnahmen zu erhalten.

Die Vorrichtung zum Prüfen der Oberfläche 1 des Reifens 2 besteht, wie in Fig. 1 gezeigt, aus einem in einem Druckprüfstand montierten Streifenprojektionssystem, bestehend aus Streifenprojektor 3 und Kamera 4, mit angeschlossener Bildverarbeitung, wobei die Triangulationsebene des Streifenprojektionssystems zweckmäßigerweise, wie dargestellt, radial zum Reifen 2 angeordnet ist. Im Ausführungsbeispiel ist die Anordnung auf einen Sektor der Reifen-Seitenwand ausgerichtet. Sie kann allerdings auch auf die gesamte Reifen-Seitenwand ausgerichtet werden.

Die Fehlererkennung erfolgt in der Weise, daß zwei Aufnahmen der Oberfläche 1 des Reifens 2 hergestellt werden, wobei der Reifen 2 zwischen den Aufnahmen um einen kleinen Winkel in seine Achse 5 gedreht wird. Mit jeder der beiden Aufnahmen wird die relative Form der Oberfläche 1 des Reifens 2 im betrachteten Bildbereich vermessen (mit einer geeigneten Kalibrierung der Kamera 4 ist es auch möglich, absolute Formdaten zu gewinnen). Wenn die beiden mit leicht verdrehtem Reifen 2 aufgenommenen Bilder verglichen werden, stellt man fest, daß sich die globale Form in beiden Aufnahmen gleicht, da der Reifen 2 rotationssymmetrisch ist, daß sich aber an Fehlerstellen deutliche Formabweichungen ergeben.

Die bildhafte Differenz der beiden hergestellten Aufnahmen stellt somit die Differenz der relativen (oder absoluten) Form der Oberfläche 1 des Reifens 2 dar und entspricht etwa der aus der Shearographie bekannten Darstellung der lokalen Formänderung.

Ein Beispiel ist in Fig. 2 gezeigt. Die obere Kurve 9 zeigt einen Schnitt durch die erste Aufnahme. Eine erste Amplitude 10 wird von einer ersten Fehlstelle erzeugt, eine zweite Amplitude 11 wird von einer zweiten Fehlstelle erzeugt.

Die mittlere Linie 12 zeigt einen Schnitt durch die zweite Aufnahme, bei deren Herstellung der Reifen 2 geringfügig um seine Achse 5 gedreht worden ist. Dementsprechend sind die Amplituden 10', 11' gegenüber den zugehörigen Amplituden 10, 11 geringfügig nach rechts verschoben.

Die untere Linie 13 zeigt das Differenzergebnis, wobei die Werte der mittleren Linie 12 von den Werten der oberen Linie 9 abgezogen worden sind. Die Ausschläge der Differenzamplituden 10" und 11" sind größer als die Ausschläge der Amplituden 10, 11 und 10' und 11'. Hierdurch können die Fehlstellen an der Oberfläche 1 des Reifens 2 zuverlässig erkannt werden.

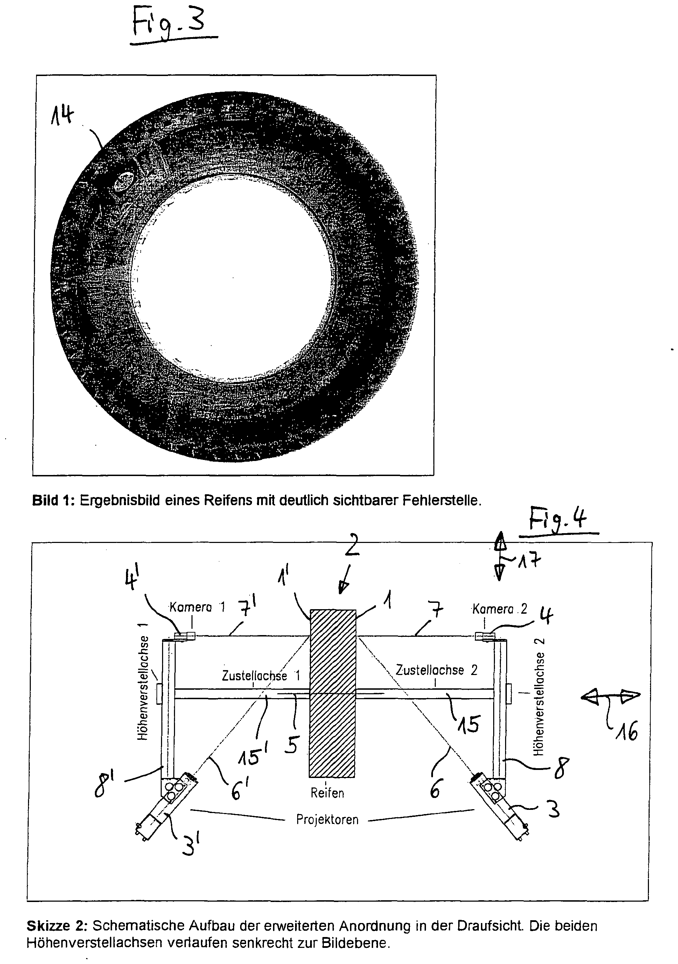

Fig. 3 zeigt eine auf diese Weise hergestellte Vergleichsaufnahme, nämlich ein Differenzbild, der Seitenwand eines Reifens. Die Fehlerstelle 14 ist deutlich sichtbar und zweifelsfrei erkennbar. Sie entspricht einer Beule oder Delle.

Die Differenzbild-Darstellung gemäß Fig. 3 kann noch durch eine geeignete Bildverarbeitung quantitativ ausgewertet und/oder als Prüfbeleg abgespeichert werden. Die Empfindlichkeit des Meßverfahrens kann auf einfache Weise durch eine Änderung des Reifendrehwinkels zwischen den Aufnahmen festgelegt werden.

Zur gleichzeitigen Vermessung beider Seitenwände des Reifens 2 können auch mehrere Projektoren und Kameras eingesetzt werden, insbesondere zwei sich gegenüberliegende Projektoren und Kameras. Ein Ausführungsbeispiel ist in Fig. 4 gezeigt. Die Anordnung ist symmetrisch zum Reifen 2. Zusätzlich zu den bereits im Ausführungsbeispiel nach Fig. 1 vorhandenen Bauteilen, nämlich dem Projektor 3 und der Kamera 4, sind noch ein weiterer Projektor 3' und eine weitere Kamera 4' auf der anderen Seite des Reifens 2 vorhanden, durch die die gegenüberliegende Oberfläche 1', also die andere Seitenwand, des Reifens 2 geprüft wird. Da der Aufbau symmetrisch ist, muß er nicht erneut im einzelnen beschrieben werden.

Bei der Ausführungsform nach Fig. 4 sind die Projektoren 3, 3' und die Kameras 4, 4' jeweils verstellbar. Nachfolgend wird die Verstellbarkeit des Projektors 3 und der Kamera 4 beschrieben. Der Projektor 3' und die Kamera 4' sind in entsprechender Weise verstellbar.

Die Schiene 8 ist etwa in ihrer Mitte an einer Zustellachse 15 befestigt. Durch eine Betätigung der Zustellachse 15 kann die Schiene in Richtung des Doppelpfeils 16 verschoben werden, also in Richtung der Achse 5. Eine Verstellung in dieser Richtung dient zur Anpassung des Projektors 3 und der Kamera 4 an unterschiedliche Reifenbreiten. Der Projektor 3 und die Kamera 4 werden entlang der Zustellachse 15 in Richtung des Doppelpfeils 16 so weit bewegt, bis die Oberfläche 1 des Reifens fokussiert ist.

Ferner ist die Schiene 8 in Richtung des Doppelpfeils 17 zustellbar. Mit der Schiene 8 bewegt sich der darauf fest montierte Projektor 3 und die darauf fest montierte Kamera 4. Durch eine Zustellung in Richtung des Doppelpfeils 17, also in einer horizontalen Ebene in einer Richtung senkrecht zur Achse 5, kann die Lage des Projektors 3 und der Kamera 4 an unterschiedliche Reifendurchmesser angepaßt werden.

Anstelle der Zustellmöglichkeit in Richtung des Doppelpfeils 17 kann auch eine Zustellmöglichkeit in einer Richtung senkrecht zur Bildebene realisiert werden.

## Patentansprüche

1. Verfahren zum Prüfen der Oberfläche (1) eines unter Druck stehenden Reifens (2), bei dem
ein Muster auf den Reifen (2) projiziert wird,
von dem auf den Reifen (2) projizierten Muster eine Aufnahme hergestellt wird,
der Reifen (2) um seine Achse (5) in eine zweite verschiedene Drehstellungen gedreht wird, **dadurch gekennzeichnet, dass** in besagter zweiten Drehstellung von dem auf den unter demselben Druck stehenden Reifen (2) projizierten Muster eine weitere Aufnahme hergestellt wird
und die globale Form des Reifens in den Aufnahmen miteinander verglichen wird.

2. Verfahren nach Anspruch 1, **dadurch gekennzeichnet, daß** das auf den Reifen (2) projizierte Muster ein Streifenmuster ist.

3. Verfahren nach Anspruch 1 oder 2, **dadurch gekennzeichnet, daß** aus den Aufnahmen ein Differenzbild gebildet wird.

4. Vorrichtung zum Prüfen der Oberfläche (1), nach einem Verfahren eines der vorhergehenden Ansprüche, eines unter Druck stehenden Reifens (2) mit
einem Projektor (3, 3') zum Projizieren eines Musters auf den Reifen (2) einer Kamera (4, 4') zum Herstellen einer Aufnahme des auf den Reifen (2) projizierten Musters,
einer Vorrichtung zum Drehen des Reifens (2) um seine Achse (5) in verschiedene Drehstellungen, **gekennzeichnet durch** eine Bildverarbeitungseinrichtung zum Vergleichen der globalen Form von zwei in verschiedenen Drehstellungen des unter demselben Druck stehenden Reifens (2) hergestellten Aufnahmen.

5. Vorrichtung nach Anspruch 4, **dadurch gekennzeichnet, daß** das auf den Reifen (2) projizierte Muster ein Streifenmuster ist.

6. Vorrichtung nach Anspruch 4 oder 5, **dadurch gekennzeichnet, daß** die Bildverarbeitungseinrichtung ein Differenzbild aus zwei in verschiedenen Drehstellungen des Reifens (2) hergestellten Aufnahmen bildet.

7. Vorrichtung nach einem der Ansprüche 4 bis 6, **dadurch gekennzeichnet, daß** der Projek tor (3, 3') eine Blitzlichtquelle umfaßt.

8. Vorrichtung nach Anspruch 7, **dadurch gekennzeichnet, daß** die Blitzlichtquelle mit der Vorrichtung zum Drehen des Reifens (2) und mit der Kamera (4, 4') synchronisiert ist.

9. Vorrichtung nach einem der Ansprüche 4 bis 8, **dadurch gekennzeichnet, daß** der Projektor (3, 3') das Muster auf eine Teilfläche des Reifens (2) projiziert.

10. Vorrichtung nach einem der Ansprüche 4 bis 8, **dadurch gekennzeichnet, daß** der Projektor das Muster auf die gesamte Reifenfläche projiziert.

11. Vorrichtung nach einem der Ansprüche 4 bis 10, **dadurch gekennzeichnet, daß** die Vorrichtung mehrere Projektoren (3, 3') und/oder mehrere Kameras (4, 4') umfaßt.

12. Vorrichtung nach Anspruch 11, **dadurch gekennzeichnet, daß** die Vorrichtung auf zwei Seiten des Reifens (2) jeweils mindestens einen Projektor (3, 3') und mindestens eine Kamera (4, 4') umfaßt.

13. Vorrichtung nach einem der Ansprüche 4 bis 12, **gekennzeichnet durch** einen oder mehrere Verstelleinrichtungen (15, 17) zum Verstellen des Projektors (3, 3') und/oder der Kamera (4, 4').

## Claims

1. A method for the inspection of the surface (1) of a pressurized tire (2), wherein a pattern is projected onto the tire (2), an image is taken of the pattern projected onto the tire (2), the tire (2) is rotated about its axis (5) into a second different position of rotation, **characterized in that** a further image is taken of the pattern projected onto the pressurized tire (2) in said second position of rotation; and **in that** the global shapes of the tire in the images are compared with one another.

2. A method in accordance with claim 1, wherein the pattern projected onto the tire (2) is a stripe pattern.

3. A method in accordance with either of claims 1 or 2, wherein a difference image is formed from the images.

4. An apparatus for the inspection of the surface (1), in accordance with a method of one of the preceding claims, of a pressurized tire (2) comprising a projector (3, 3') for the projection of a pattern onto the tire (2), a camera (4, 4') for the taking of an image of the pattern projected onto the tire (2), an apparatus for the rotation of the tire (2) about its axis (5) into different positions of rotation,
**characterized by** an image processing device for the comparison of the global shape of two images taken at different positions of rotation of the tire (2) pressurized to the same pressure.

5. An apparatus in accordance with claim 4, wherein the pattern projected onto the tire (2) is a stripe pattern.

6. An apparatus in accordance with either of claims 4 or 5, wherein the image processing device forms a difference image from two images taken at different positions of rotation of the tire (2).

7. An apparatus in accordance with any one of the claims 4 to 6, wherein the projector (3, 3') comprises a flashlight source.

8. An apparatus in accordance with claim 7, wherein the flashlight source is synchronized with the apparatus for the rotation of the tire (2) and with the camera (4, 4').

9. An apparatus in accordance with any one of the claims 4 to 8, wherein the projector (3, 3') projects the pattern onto a partial surface of the tire (2).

10. An apparatus in accordance with any one of the claims 4 to 8, wherein the projector projects the pattern onto the total tire surface.

11. An apparatus in accordance with any one of the claims 4 to 10, wherein the apparatus comprises a plurality of projectors (3, 3') and/or a plurality of cameras (4, 4').

12. An apparatus in accordance with claim 11, wherein the apparatus respectively comprises at least one projector (3, 3') and at least one camera (4, 4') on two sides of the tire (2).

13. An apparatus in accordance with any one of the claims 4 to 12, **characterized by** one or more adjustment devices (15, 17) for the adjustment of the projector (3, 3') and/or of the camera (4, 4').

## Revendications

1. Méthode de test de la surface (1) d'un pneu (2) se trouvant sous pression, dans laquelle
un motif est projeté sur le pneu (2),
une prise de vue du motif projeté sur le pneu (2) est réalisée,
le pneu (2) est tourné sur son axe (5) dans une seconde position de rotation différente,
**caractérisée en ce que**, dans ladite seconde position de rotation, une autre prise de vue du motif projeté sur le pneu (2) se trouvant sous la même pression est réalisée
et la forme globale du pneu est comparée dans les prises de vue.

2. Méthode selon la revendication 1, **caractérisée en ce que** le motif projeté sur le pneu (2) est un motif à rayures.

3. Méthode selon la revendication 1 ou 2, **caractérisée en ce qu'**une image des différences est formée à partir des prises de vue.

4. Dispositif de test de la surface (1), selon une méthode selon l'une des revendications précédentes, d'un pneu (2) se trouvant sous pression, comprenant
un projecteur (3, 3') destiné à projeter un motif sur le pneu (2)
une caméra (4, 4') destinée à réaliser une prise de vue du motif projeté sur le pneu (2),
un dispositif destiné à tourner le pneu (2) sur son axe (5) dans différentes positions de rotation
**caractérisé par** un dispositif de traitement d'images destiné à comparer la forme globale de deux prises de vue réalisées dans différentes positions de rotation du pneu (2) se trouvant sous la même pression.

5. Dispositif selon la revendication 4, **caractérisé en ce que** le motif projeté sur le pneu (2) est un motif à rayures.

6. Dispositif selon la revendication 4 ou 5, **caractérisé en ce que** le dispositif de traitement d'images forme une image des différences à partir de deux prises de vue réalisées dans différentes positions de rotation du pneu (2).

7. Dispositif selon l'une des revendications 4 à 6, **caractérisé en ce que** le projecteur (3, 3') comprend une source de lumière flash.

8. Dispositif selon la revendication 7, **caractérisé en ce que** la source de lumière flash est synchronisée avec le dispositif destiné à tourner le pneu (2) et avec la caméra (4, 4').

9. Dispositif selon l'une des revendications 4 à 8, **caractérisé en ce que** le projecteur (3, 3') projette le motif sur une surface partielle du pneu (2).

10. Dispositif selon l'une des revendications 4 à 8, **caractérisé en ce que** le projecteur projette le motif sur toute la surface du pneu.

11. Dispositif selon l'une des revendications 4 à 10, **caractérisé en ce que** le dispositif comprend plusieurs projecteurs (3, 3') et/ou plusieurs caméras (4, 4').

12. Dispositif selon la revendication 11, **caractérisé en ce que** le dispositif comprend respectivement au moins un projecteur (3, 3') et au moins une caméra (4, 4') sur deux côtés du pneu (2).

13. Dispositif selon l'une des revendications 4 à 12, **caractérisé par** un ou plusieurs dispositifs de déplacement (15, 17) pour déplacer le projecteur (3, 3') et/ou la caméra (4, 4').
